# EUROPEAN PATENT APPLICATION

(11) **EP 3 556 788 A1**
(43) Date of publication of application: **23.10.2019**
(21) Application number: 18167985.3
(22) Date of filing: 18.04.2018
(51) Int. Cl.: C08G 18/66, C08G 18/76, C08G 18/10, C08L 75/04, B60C 7/10, C08G 18/63

(54) **NON-PNEUMATIC TIRE AND METHOD FOR PREPARING THE SAME AND USE THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention provides a non-pneumatic tire and a method for preparing the same and use thereof. The non-pneumatic tire according to the present invention comprises a polyurethane matrix material and a thermoplastic expandable polymer material dispersed in the polyurethane matrix material. As compared with the non-pneumatic tire in the prior art, the non-pneumatic tire according to the present invention has lower overall weight, high wear resistance, high tire dynamic characteristics and excellent hydrolysis resistance.

## Description

### TECHNICAL FIELD

The present invention relates to a non-pneumatic tire and a method for preparing the same and use thereof, in particular to a non-pneumatic tire comprising a polyurethane composite layer.

### BACKGROUND ART

At present, low-speed vehicles such as bicycles usually have two kinds of tires, namely, pneumatic tires and filled tires.

Pneumatic tires, as they are filled with gas (such as air), have advantages such as light weight, good elasticity, and riding comfort. The main disadvantages of pneumatic tires are leakage, flat tires and other failures due to various reasons.

Filled tires are also known as non-pneumatic tires or solid tires. As they are filled with solid or semi-solid materials rather than compressed air, there is no such problem as air inflation or leakage. Thus, non-pneumatic tires can be basically maintenance-free during their life cycle.

The filling materials for filled tires should not only enable the tires to absorb vibration, provide good traction, have high elasticity and high toughness etc., but also not accumulate excessive heat during the use, because excessive heat accumulation may damage the tires and shorten the service life of the tires.

Polyurethane/urea elastomer foams prepared according to proper formulations have been used as the filling materials for tires. CN105001394A discloses a self-skinning compound material for heat-resistant polyurethane foaming tire and preparation method thereof. In the invention, the polyurethane heat resistance is improved by adding a suitable number of rigid structures, i.e. benzene ring structures. The tires prepared can withstand the heat generated during the high-speed rotation within a certain period of time, which is better than the conventional polyurethane microporous foam tires, and can be used for a longer period under conditions of loading and a high rate, thereby broadening the scope of application of polyurethane foam tires and reducing the demanding use requirements.

CN105939870A discloses a polyurethane filled tire, which is made of a porous polyurethane elastic material having a molding density of 400-700 kg/m³, preferably of 500-600 kg/m³, and a free rise density of 250-350 kg/m³, preferably of 300-320kg/m³ (according to ISO 845). The filling material used therein is an improved porous polyurethane or polyurethane-urea elastic material.

The porous polyurethane elastomer with properties such as hydrolysis resistance and abrasion resistance for filling the filled tire can satisfy the requirement of good elasticity for use as a tire, but the weight thereof is generally higher than that of a pneumatic tire. The heat generated during operation of the prior art non-pneumatic tire at a higher rate (e.g., 15 km/h) seriously affects the life of the tire.

Therefore, it is necessary to develop a non-pneumatic tire having a low weight and long service life, while maintaining the advantages of pneumatic tires, in the tire industry.

### SUMMARY OF THE INVENTION

One object of the present invention is to provide a non-pneumatic tire. The non-pneumatic tire comprises a polyurethane composite layer which comprises a polyurethane matrix material and a thermoplastic expandable polymer material dispersed in the polyurethane matrix material.

The polyurethane matrix material is obtained by a reaction comprising the following reaction components:
(A1) a polyisocyanate composition, preferably having a free NCO-value of 15-25 wt.-% (test method: GBT 18446-2009) and comprising an isocyanate-terminated prepolymer, said prepolymer is the reaction product of excessive organic polyisocyanate with a polyether polyol, wherein the polyether polyol has an average nominal hydroxyl functionality of 2-6, a number average molecular weight of 2000-6000 g/mol (calculated according to GB/T 7383-2007: test method for hydroxyl value) and an ethylene oxide content of 20-35 wt.-%, wherein at least 50% of the ethylene oxide groups are present at the end of the polyether polyol;
(A2) optionally one or more naphthenic oils;
(B1) at least one polyalkylene oxide-based polyether polyol having a number average molecular weight of 2000-7000 g/mol (calculated according to GB/T 7383-2007: test method for hydroxyl value) and containing 15-35 wt.-% of solid particles based on the total weight of the polyether polyol;
(B2) one or more chain extenders;
(B3) one or more catalysts; and
(B4) one or more foaming agents.

The polyisocyanate composition according to the present invention has preferably a free NCO-value of 15-25 wt.-% (test method: GBT 18446-2009) and comprises an isocyanate-terminated prepolymer being the reaction product of excessive organic polyisocyanate with a polyether polyol, wherein the polyether polyol has an average nominal hydroxyl functionality of 2-6, a number average molecular weight of 2000-6000 g/mol (calculated according to GB/T 7383-2007: test method for hydroxyl value) and an ethylene oxide content of 20-35 wt.-%, wherein at least 50% of the ethylene oxide groups are present at the end of the polyalkylene oxide-based polyether polyol.
The thermoplastic expandable polymer material according to the present invention has preferably a density of 80-300 g/m³, more preferably of 80-200 g/m³, and most preferably of 80-150 g/m³, preferably a particle diameter of 2-8 mm, more preferably of 3-7 mm, and most preferably of 4-6 mm.
The content of the thermoplastic expandable polymer material according to the present invention is preferably 10-50 wt.-%, more preferably 10-35 wt.-%, based on that the weight of the polyurethane composite layer is 100 wt.-%.
The thermoplastic expandable polymer material according to the present invention is preferably one or more selected from the group consisting of foamable thermoplastic polyurethane, foamable polyethylene, foamable polypropylene materials and foamable vinyl acetate.
The thermoplastic expandable polymer material according to the present invention is distributed in the polyurethane matrix in the form of particulates.
The non-pneumatic tire according to the present invention further comprises a rubber layer arranged externally to the polyurethane composite layer.
The polyurethane composite layer according to the present invention has preferably a molding density of 320-600 kg/m³, more preferably of 350-450 kg/m³ (according to ISO 845).
As a preferred embodiment of the present invention, the reaction components for the polyurethane matrix material further comprise one or more naphthenic oils as a component. The naphthenic oil is a common name for saturated cyclic carbon chain hydrocarbons and the professional name thereof is cycloalkyl oil. It has a saturated cyclic carbon chain structure and usually has a saturated branched chain attached to its ring. Due to its main feature of one or more saturated cyclic carbon chains in the molecule and the appearance of an oily liquid, it is called naphthenic oil. The naphthenic oil may be incorporated into the component (A1), wherein the naphthenic oil presents 5-50 wt.-%, based on that the weight of the component (A1) is 100 wt%; or the naphthenic oil may be incorporated into at least one of the components (B1) to (B4), wherein the naphthenic oil presents 5-30 wt.-%, preferably 10-20 wt.-%, based on that the total weight of the components (B1)-(B4) is 100 wt.-%. The addition of the naphthenic oil component makes the tire of the present invention more superior in terms of high temperature resistance and particularly suitable for vehicles running at a high rate. In addition, due to the lower cost of naphthenic oil, the presence of this component can reduce the overall cost of the tire and result in a more economical tire product.
The non-pneumatic tire according to the present invention has a circular cross-section. Another object of the present invention is to provide a method for preparing a non-pneumatic tire, wherein the tire comprises a polyurethane composite layer which comprises a polyurethane matrix material and a thermoplastic expandable polymer material dispersed in the polyurethane matrix material, the method comprising the following steps:
1) placing the thermoplastic expandable polymer material in a mold cavity for molding the polyurethane composite layer and uniformly distributing the thermoplastic expandable polymer material in the mold cavity through centrifugal rotation,
2) injecting a polyurethane system for forming the polyurethane matrix material into the mold cavity where the polyurethane system is subjected to foaming and cured so as to obtain the polyurethane composite layer; and
3) obtaining the non-pneumatic tire from the polyurethane composite layer.

The polyurethane matrix material used in the method above is as described previously.
The content of the thermoplastic expandable polymer material in the polyurethane composite layer used in the method according to the present invention is 10-50 wt.-%, preferably 10-35 wt.-%, based on that the weight of the polyurethane composite layer is 100 wt.-%. The thermoplastic expandable polymer material has a particle diameter of 2-8 mm, preferably of 3-7 mm, and more preferably of 4-6 mm, and it is distributed in the polyurethane matrix.
The thermoplastic expandable polymer material mentioned above is one or more selected from the group consisting of foamable thermoplastic polyurethane, foamable polyethylene, foamable polypropylene materials and foamable vinyl acetate, distributed in the polyurethane matrix in the form of particulates.
The non-pneumatic tire prepared by the method according to the present invention further comprises a rubber layer arranged externally to the polyurethane composite layer.
A further object of the present invention is to provide use of the non-pneumatic tire according to the present invention in the manufacture of a non-motor vehicle and the prepared non-motor vehicle.
The non-pneumatic tire according to the present invention is manufactured by replacing the traditional porous polyurethane with the polyurethane composite layer.

### BRIEF DESCRIPTION OF THE FIGURES

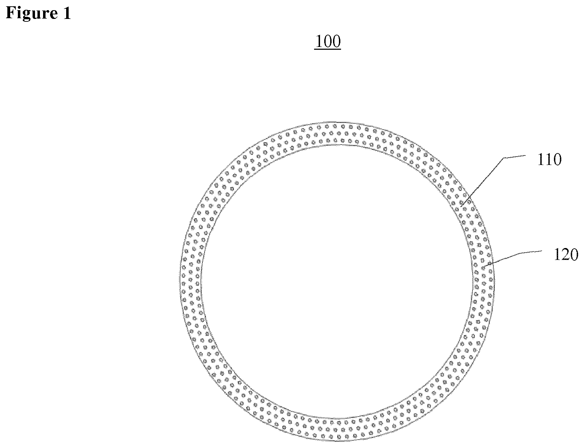

Figure 1 is a schematic view of a cross-section of a non-pneumatic tire, wherein 100 refers to the non-pneumatic tire, 110 refers to a polyurethane matrix material, and 120 refers to a thermoplastic expandable polymer material.

The figure is used to further describe the specific Examples and method disclosed in the present invention. The figure and the brief description thereof are intended to be illustrative and non-limiting.

### DETAILED DESCRIPTION OF THE INVENTION

The present invention is further described below with reference to specific Examples. It should be understood that these Examples are only for illustrating the present invention and are not intended to limit the scope of the present invention. In addition, it should be understood that upon reading the present invention, those skilled in the art can make various modifications or changes to the present invention and these equivalents also fall within the scope of the appended claims of the present application.

The non-pneumatic tire according to the present invention comprises a polyurethane composite layer which comprises a polyurethane matrix material and a thermoplastic expandable polymer material dispersed in the polyurethane matrix material. With the polyurethane composite layer, the tire retains the high wear resistance, high tire dynamic characteristics and excellent hydrolysis resistance of the non-pneumatic polyurethane tire while reducing the overall weight.

### Polyurethane matrix material

The polyurethane matrix material in the polyurethane composite layer according to the present invention is prepared by a reaction comprising the following components:
(A1) a polyisocyanate composition, preferably having a free NCO-value of 15-25 wt.-% and comprising an isocyanate-terminated prepolymer, said prepolymer is the reaction product of excessive organic polyisocyanate with a polyether polyol, wherein the polyether polyol has an average nominal hydroxyl functionality of 2-6, a number average molecular weight of 2000-6000 g/mol (calculated according to GB/T 7383-2007 test method for hydroxyl value) and an ethylene oxide content of 20-35 wt.-%, wherein at least 50% of the ethylene oxide groups are present at the end of the polyether polyol;
(A2) optionally one or more naphthenic oils; the one or more naphthenic oils may be incorporated into the polyisocyanate composition in a percentage by weight of 5-50 wt.-%, preferably a percentage by weight of 10-30 wt.-%, based on that the weight of the polyisocyanate composition is 100 wt..-%.
(B1) at least one polyalkylene oxide-based polyether polyol having a number average molecular weight of 2000-7000 g/mol (calculated according to GB/T 7383-2007: test method for hydroxyl value) and containing 15-35 wt.-% of solid particles based on the total weight of the polyether polyol;
(B2) one or more chain extenders;
(B3) one or more catalysts; and
(B4) one or more foaming agents.

The polyurethane system of the present invention can be classified into a one-component reaction system, a two-component reaction system or a multi-component system according to the combination of component(s). The two-component polyurethane system divides all components into two components, namely, component A and component B. The component A generally and in the present invention refers to the isocyanate component. The component B generally and in the present invention refers to all other components. In the present invention, the polyurethane system is preferably a two-component reaction system.
The one-component polyurethane system has all the components mixed together for later use. The multi-component polyurethane system divides all components into multiple components. The components and the amounts thereof in the one-component or multi-component polyurethane system can be determined by referring to those in the two-component polyurethane system.
In the present invention, the two-component polyurethane system comprising components A and B is used as an example for illustration, wherein the component A is the polyisocyanate composition (A) and all other components are collectively referred to as the component B.

### Component (A): polyisocyanate composition

The organic polyisocyanates for preparing the polyisocyanate composition of the present invention include aliphatic, cycloaliphatic and araliphatic polyisocyanates such as hexamethylene diisocyanate, isophorone diisocyanate, cyclohexane-1,4-diisocyanate, dicyclohexylmethane-4,4"-diisocyanate and p-xylylene diisocyanate.

Preferred polyisocyanates are aromatic polyisocyanates, for example, phenylene diisocyanate, tolylene diisocyanate, 1,5-naphthalene diisocyanate and, in particular, diphenylmethane diisocyanate (MDI)-based polyisocyanates such as a MDI isomer, i.e. 4,4'-diphenylmethane diisocyanate, 2,4'-diphenylmethane diisocyanate and mixtures thereof.

More preferably, the amount of 4,4'-diphenylmethane diisocyanate used as the organic polyisocyanate is more than 95 wt.-%, based on the total weight of the organic polyisocyanate. Most preferably, the amount of 4,4'-diphenylmethane diisocyanate used as the organic polyisocyanate is greater than 97 wt.-%, based on the total weight of the organic polyisocyanate.

When diisocyanates are the preferred polyisocyanates for the preparation of the polyisocyanate composition, mixtures of diisocyanates and polyisocyanates having small proportions and higher functionality can be used, if necessary. Other MDI variants are well known in the art and include liquid products obtained by incorporating urethane, allophanate, urea, biuret, carbodiimide, uretonimine and/or isocyanurate residues.

In a preferred embodiment the polyisocyanate composition comprises an isocyanate-terminated prepolymer which is prepared by a reaction of excessive polyisocyanate with a polyether polyol or a polyester polyol to obtain a prepolymer having a specified NCO value. The method for preparing the prepolymer has been described in the art. The relative amounts of polyisocyanate and polyether polyol depend on their equivalents and desired NCO values, and can be readily determined by those skilled in the art. The reaction can be carried out in the presence of a catalyst that enhances the formation of a urethane group, for example, a tertiary amine and a tin compound, if necessary. The reaction time ranges from 30 minutes to 4 hours, and the reaction temperature ranges from 50 to 90°C.

At least 90% of the groups obtained by the reaction of the polyisocyanate with the polyether polyol for the preparation of the prepolymer are polyurethane groups. The polyisocyanates can be added to the prepared prepolymer, provided that the NCO value is maintained within a specified range. The amount of addition thereof is generally less than 25 wt.-%, based on the total weight of the polyisocyanate composition. Moreover, the polyisocyanates added may be selected from those mentioned above. Aromatic polyisocyanates, especially MDI-based polyisocyanates, are preferred.

According to an embodiment, the polyisocyanates together with the naphthenic oil component may be involved in the reaction of the system. The naphthenic oil is a common name for saturated cyclic carbon chain hydrocarbons and the professional name thereof is cycloalkyl oil. It has a saturated cyclic carbon chain structure and usually has a saturated branched chain attached to its ring. Due to its main feature of one or more saturated cyclic carbon chains in the molecule and the appearance of an oily liquid, it is called naphthenic oil. Commercial products of the naphthenic oil are, for example, Califlux LP or Bearflex LPO from Whitco Chemical Company, Viplex 530A from Crowley Chemical and the like.

### Component (B1): at least one polyalkylene oxide-based polyether polyol

Polyether polyols for preparing the isocyanate-terminated prepolymers include the products obtained by the polymerization of ethylene oxide with other cyclic oxides such as propylene oxide or tetrahydrofuran in the presence of a multifunctional initiator. Suitable initiator compounds contain a plurality of active hydrogen atoms, and include water and polyols such as ethylene glycol, propylene glycol, diethylene glycol, dipropylene glycol, cyclohexanedimethanol, resorcinol, bisphenol A, glycerol, trimethylolpropane, 1,2,6-hexanetriol or pentaerythritol.
Mixtures of initiators and/or cyclic oxides may be used.
Particularly useful polyether polyols include poly(oxyethylene-oxypropylene) glycol and triol obtained by sequential addition of propylene oxide and ethylene oxide to di- or trifunctional initiators as fully described in the art. Mixtures of the diols and triols may likewise be useful.
The polyester polyol is obtained by reacting a dicarboxylic acid or dicarboxylic anhydride with a polyol. The dicarboxylic acid is preferably, but not limited to, an aliphatic carboxylic acid having 2 to 12 carbon atoms, such as succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, or mixtures thereof. The dicarboxylic anhydride is preferably, but not limited to, phthalic anhydride, tetrachlorophthalic anhydride, maleic anhydride, or mixtures thereof. The polyol is preferably but not limited to ethylene glycol, diethylene glycol, 1,2-propanediol, 1,3-propanediol, dipropylene glycol, 1,3-methylpropanediol, 1,4-butanediol, 1,5-pentanediol, 1,6-hexanediol, neopentyl glycol, 1,10-decanediol, glycerol, trimethylolpropane or mixtures thereof. The polyester polyol also includes a polyester polyol prepared from a lactone which is preferably, but not limited to, ε-caprolactone.
The polycarbonate polyols are preferably, but not limited to, polycarbonate diols. The polycarbonate diol can be prepared by reacting a diol with a dihydrocarbyl or diaryl carbonate or phosgene. The diol is, preferably but not limited to, 1,2-propanediol, 1,3-propanediol, 1,4-butanediol, 1,5-pentanediol, 1,6-hexanediol, diethylene glycol, trioxymethylene glycol, or mixtures thereof. Said dihydrocarbyl or diaryl carbonate is preferably, but not limited to, diphenyl carbonate.
The polyester polyols have a functionality of 2-3 and a hydroxyl value of 20-180. Polyester polyols having a functionality of 2 and a hydroxyl value of 28-112 are preferred.
According to an embodiment, the at least one polyalkylene oxide-based polyether polyol is selected from filled polyether polyols containing 15-35 wt.-% of solid particles based on the total weight of the polyol and having an average ethylene oxide content up to 20 wt.-%, preferably 10-20 wt.-%, and wherein the ethylene oxide groups are present at the end of the polyether polyol (terminated).
According to an embodiment, the at least one polymer polyol is selected from filled polyether polyols containing from 15-35 wt.-% of solid particles based on the total weight of the polyol, and wherein the polymer polyol is a dispersion of polymer solid particles such as styrene-based polymer particles in a polyol. Examples of styrene polymer particles include so-called "SAN" particles of styrene-acrylonitrile.

According to a preferred embodiment, the at least one polyalkylene oxide-based polyether polyol is a polyol mixture comprising a first polyether polyol and a second polyether polyol, with the proviso that the mixture contains 15-45 wt.-% of solid particles based on the total weight of the polyol mixture. The number average molecular weight of the mixture is preferably from 4000 to 7000 g/mol. The first polyether polyol preferably has a number average molecular weight of 5000-7000 g/mol and an ethylene oxide content of 10-20 wt.-%, and wherein the ethylene oxide groups are present at the end of the polyether polyol (terminated). The second polyether polyol preferably has a number average molecular weight of 4000-6000 g/mol and an ethylene oxide content of 10-20 wt.-%, and wherein the ethylene oxide groups are present at the end of the polyether polyol (terminated). The ratio of the first polyether polyol to the second polyether polyol is preferably from 20/80 to 40/60. Suitable examples of the first polyether polyol in the polymer polyol include, but are not limited to, Hyperlite® 1650, E-851; E-850 (available from Covestro); CHP-H45; CHP-H30 (available from Jiangsu Changhua Polyurethane Technology Co., Ltd.), SPEC FLEX NC 700 (available from DOW).
According to another preferred embodiment, the at least one polyalkylene oxide-based polyether polyol is a polyol mixture comprising a first polyether polyol and a second polyether polyol, provided that the mixture contains 15-35 wt.-% of solid particles based on the total weight of the polyol mixture. The number average molecular weight of the mixture is preferably 2000-4000 g/mol. The first polyether polyol preferably has a number average molecular weight of 1000-2000 g/mol and is preferably selected from polytetrahydrofuran (also referred to as polytetramethylene ether glycol). The second polyether polyol preferably has a number average molecular weight of 4000-6000 g/mol, preferably of about 5000 g/mol, and an ethylene oxide content of 10-20 wt.-%, and wherein the ethylene oxide groups are present at the end of the polyether polyol (terminated). The ratio of the first polyether polyol to the second polyether polyol is preferably from 80/20 to 40/60. Suitable examples of the first polyether polyol in the polymer polyol include, but are not limited to, Terathane® from Invista and PoIyTHF® from BASF.

### Component (B2): one or more chain extenders and crosslinkers

Preferably, the chain extenders and crosslinkers are polyols having a hydroxyl functionality of 2-6, preferably of 2-4 and a number average molecular weight of 60-490 g/mol such as ethylene glycol, (mono)ethylene glycol, diethylene glycol, propylene glycol, dipropylene glycol, butanediol, glycerol, trimethylolpropane, hexanediol, pentaerythritol and polyethylene glycol having a number average molecular weight of 499 g/mol and less. The amount of chain extenders and crosslinkers is up to 15 parts by weight per 100 parts by weight of the polyol for reacting with the polyisocyanate composition. More preferably, the amount of chain extenders and crosslinkers is preferably 5-15 parts by weight per 100 parts by weight of the polyol for reacting with the polyisocyanate composition. According to a preferred embodiment, the chain extenders are monoethylene glycol (MEG), butanediol and/or hexanediol.

### Component (B3): one or more catalysts

Common catalysts can be classified into the following categories: 1) (cyclo) aliphatic tertiary amine catalysts such as triethylamine diamine DABCO; pentamethyl-diethyltriamine; DMCHA; N,N-dimethylcyclohexylamine; 2) metal compounds such as organotin; dibutyltin laurate-DBTDL; products from Momentive Inc.: products of UL series, UL-4, UL-6, UL-22, UL-28, UL-32, etc.; 3) hydroxyl-containing catalysts: dimethylaminopropyldipropanolamine (DPA); N-methyldiethanolamine (MDEA); dimethylaminopropylamine (DMAPA) -Amin Z, etc.; 4) ether amine catalysts: bis N,N'-dimethylaminoethyl ether; N-ethylmorpholine (NEM); 2,2-dimorpholinodiethyl ether (DMDEE), etc.

### Component (B4): one or more foaming agents

The foaming agent may be selected from fluorine-based hydrocarbon compounds (hydrofluorocarbon compounds) and/or alternatively from acetal-based compounds and/or water. The foaming agent may be a combination of the above compounds.

According to an embodiment, the foaming agent is a fluorine-based hydrocarbon compound. A suitable fluorine-based hydrocarbon is Forane® 365 (available from Arkema). The amount of the fluorine-based hydrocarbon compound, if used alone, is 3-6 wt.-%, based on the total weight of the reaction system.

Preferably, in the case of the absence of other foaming agents, the amount of water used as a foaming agent can be varied in a known manner to achieve the desired density. A suitable amount of water is generally at least 0.3 parts by weight, preferably from 0.3-1.2 parts by weight per 100 parts of the reaction system. Preferably, water is the only foaming agent.

### Component (B5): one or more naphthenic oils

The definition and source of the naphthenic oil component is as previously described. The naphthenic oil component mixing with any one or more of B (B1-B4) can also play the same role, making tires have better high temperature resistance and be more economical.
The one or more naphthenic oils may be incorporated into the polyether polyol composition, with the percentage by weight of 5-30 wt.-%, preferably 10-20 wt.-%, based on that the weight of the polyether polyol composition is 100 wt.-%.

The polyurethane system may further comprise conventional additives such as surfactants, colorants, stabilizers, fillers and release agents.

### Thermoplastic expandable polymer material

The thermoplastic expandable polymer material includes, but is not limited to, polymer pearl cotton, thermoplastic polyurethane elastomer TPU, ethylene-vinyl acetate EVA, polyethylene EPE having a non-crosslinked closed cell structure and a low density, expandable and foamable polypropylene EPP, etc., and organosilicon powder including organosilicone rubber powder and organosilicone resin powder. Polymer pearl cotton is particularly preferred.

The thermoplastic expandable polymer material has preferably a density of 80-300 g/m³, more preferably of 80-200 g/m³, and most preferably of 80-150 g/m³.

The thermoplastic polymer material is preferably a particulate foaming material. The particulate thermoplastic polymer material has preferably a particle diameter of 2-8 mm, more preferably of 3-7 mm, and most preferably of 4-6 mm.

Suitable thermoplastic expandable polymer material is, for example, thermoplastic TPU pearl cotton from JSP Company, Japan; Infinergy™32-100U10 thermoplastic TPU pearl cotton from BASF; EPE pearl cotton ETAHFOAM from Dow Chemical Company, etc.; organosilicone powder produced by Shin-Etsu Chemical Co., Ltd. including, for example, organosilicone rubber powder KMP-597, KMP-598 and organosilicone resin KPM series, etc.

### Polyurethane composite layer

The polyurethane composite layer according to the present invention comprises the polyurethane matrix material and the thermoplastic polymer material distributed therein.

The polyurethane matrix material presents 50-95 wt.-%, preferably 60-90 wt.-%, more preferably 65-85 wt.-%, particularly preferably 70-85 wt.-% of the polyurethane composite layer, based on that the weight of the polyurethane composite layer is 100%. The polyurethane matrix material has a molding density of preferably 320-600 kg/m³, more preferably of 350-450 kg/m³ and a free rise density of preferably 200-350 kg/m³, more preferably of 240-300 kg/m³ (according to ISO 845).

The content of the thermoplastic polymer material in the polyurethane composite layer is preferably 10-50 wt.-%, more preferably 10-35 wt.-%, based on that the weight of the polyurethane composite layer is 100%.

### Non-pneumatic tire

The non-pneumatic tire according to the present invention comprises the polyurethane composite layer. The molded polyurethane composite layer can be directly used as the final non-pneumatic tire according to the requirement of the final product. The non-pneumatic tire may further comprise a rubber layer which is arranged externally to the polyurethane composite layer. Specifically, the rubber layer may cover the polyurethane composite core tire to obtain a final non-pneumatic tire.

As shown in FIG. 1, the non-pneumatic tire comprises a rubber cover tire and a polyurethane composite layer composed of a thermoplastic expandable polymer and a polyurethane matrix material.

### Method for manufacturing a non-pneumatic tire

The method for manufacturing a non-pneumatic tire according to the present invention comprises the following steps:
1) adding the thermoplastic expandable polymer material to a mold cavity for molding the polyurethane composite layer and uniformly distributing the thermoplastic expandable polymer material in the mold cavity through centrifugal rotation,
2) injecting a polyurethane system for forming the polyurethane matrix material into the mold cavity where the polyurethane system is subjected to centrifugal-molding foaming and cured so as to obtain the polyurethane composite layer; and
3) obtaining the non-pneumatic tire from the polyurethane composite layer.

In the present invention, unless otherwise specified, the serial numbers of the steps of the method are used only for the convenience of description and understanding of the present invention, and are not intended to limit the sequence of steps of the method. For example, regarding steps (a) and (b), step (a) may either take place before step (b) or after step (b), or steps (a) and (b) may take place at the same time.
The thermoplastic polymer material used in the present invention is generally prepared using a plastic extrusion granulation process, and it can employ conventional, commercially available products as described above.
The mold used in the present invention can be prepared using the conventional tire mold process, method and materials, according to the required inner diameter, outer diameter, cross-sectional size and shape of the non-pneumatic tire to be prepared. The cavity in the mold for forming the polyurethane composite layer can generally be ring-shaped.
The thermoplastic expandable polymer according to the present invention can be injected into the mold cavity under centrifugal rotation or it can be injected into the mold cavity at rest and then subject to centrifugal rotation. It is preferred in the present invention that the thermoplastic expandable polymer is injected into the mold cavity under centrifugal rotation. Regardless of the mode of injection, the thermoplastic expandable polymer material should have a substantially uniform distribution in the cavity.
Mixing of the polyisocyanate composition (component A) with the polyether polyol component (including components B1-B4) in the polyurethane system according to the present invention can be carried out using a two-component high pressure mixing system. In the prior art, molding of the filling material can be realized by simply casting the foaming material for filling. However, the conventional casting method makes it difficult to achieve the object of the present invention for preparing a non-pneumatic tire. In the present invention, the polyurethane system is injected into the cavity by centrifugal casting which allows uniform distribution of the polyurethane system in the cavity. The casting is preferably carried out using an open mold, preferably a rotary open mold, with a centrifugal rotary speed of 150-800 rpm, preferably of 200-600 rpm, particularly preferably of 200-350 rpm.
In the present invention, in addition to allowing the polyurethane system to be uniformly distributed in the cavity, centrifugal casting also allows compounding the thermoplastic polymer material with the polyurethane system. During centrifugal casting of the polyurethane system, the thermoplastic expandable polymer is dispersed in the polyurethane system under the effect of centrifugation and the pressure of the feed of the cast polyurethane system. In the present invention, the thermoplastic expandable polymer material is distributed in the polyurethane system by centrifugal casting.
The cast polyurethane system is rotationally molded in the cavity, foamed and cured to form the polyurethane matrix, while the thermoplastic expandable polymer is compounded with the polyurethane matrix material. The polyurethane system is cured at an elevated temperature of 50-80°C, preferably in an oven.
The other layers of the tire may include a rubber layer which is arranged externally to the polyurethane composite layer.

As a preferred embodiment, there is also a step of preheating the mold before step 1), with the purpose of speeding up the reaction speed of the polyurethane system, quick demolding, and improving the production efficiency.
The mold for preparing a non-pneumatic tire is preferably a mold capable of centrifugal casting, and various methods may be used. For example, method 1: in the mold, the thermoplastic expandable polymer material particles are first added to the rubber tire according to a weight ratio, and a corresponding proportion of the polyurethane system is injected by centrifugal casting. The polyurethane system is reacted, foamed, and molded to form a polyurethane-thermoplastic expandable polymer composite core tire. Then the polyurethane-thermoplastic expandable polymer composite core tire is covered by a rubber cover tire.

Method 2: the thermoplastic expandable polymer material particles are first added to the rubber tire according to a weight ratio, and a corresponding proportion of the polyurethane system is injected by centrifugal casting. The polyurethane system is reacted, foamed, and molded to form an integrated polyurethane-thermoplastic expandable polymer composite and rubber cover tire. According to the characteristics of the polyurethane system, the polyurethane is aged under room temperature or oven heating conditions to obtain the final product.

The present invention also provides the use of the non-pneumatic tire according to the present invention in the manufacture of a two-four-wheeled vehicle having a speed of less than 30 km/h and a two-four-wheeled vehicle using the same. The two-four-wheeled vehicles include non-motorized vehicles, counterbalanced vehicles and the like. The non-motor vehicles include two-wheeled vehicles, tricycles, bicycles and the like.

In a first preferred embodiment, the invention relates to a non-pneumatic tire, comprising a polyurethane composite layer which comprises a polyurethane matrix material and a thermoplastic expandable polymer material dispersed in the polyurethane matrix material,
wherein the polyurethane matrix material is obtained by a reaction comprising the following components:
(A1) a polyisocyanate composition;
(B1) at least one polyalkylene oxide-based polyether polyol having a number average molecular weight of 2000-7000 g/mol (calculated according to GB/T 7383-2007: test method for hydroxyl value) and containing 15-35 wt% of solid particles based on the total weight of the polyether polyol;
(B2) one or more chain extenders;
(B3) one or more catalysts; and
(B4) one or more foaming agents.

In a second preferred embodiment, the invention relates to the non-pneumatic tire according to the first embodiment, wherein the polyisocyanate composition has a free NCO-value of 15-25 wt% (test method: GBT 18446-2009) and comprises an isocyanate-terminated prepolymer being the reaction product of excessive organic polyisocyanate with a polyether polyol, wherein the polyether polyol has an average nominal hydroxyl functionality of 2-6, a number average molecular weight of 2000-6000 g/mol (calculated according to GB/T 7383-2007: test method for hydroxyl value) and an ethylene oxide content of 20-35 wt%, wherein at least 50% of the ethylene oxide groups are present at the end of the polyalkylene oxide-based polyether polyol.

In a third preferred embodiment, the invention relates to the non-pneumatic tire according to any of embodiments 1 or 2, wherein the polyurethane matrix material further comprises one or more naphthenic oils as a component.

In a fourth preferred embodiment, the invention relates to the non-pneumatic tire according to any of embodiments 1 or 2, wherein the thermoplastic expandable polymer material has a density of 80-300g/m³, preferably of 80-200 g/m³, and more preferably of 80-150 g/m³.

In a fifth preferred embodiment, the invention relates to the non-pneumatic tire according to any of embodiments 1 or 2, wherein the content of the thermoplastic expandable polymer material is 10-50wt%, preferably 10-35wt%, based on that the weight of the polyurethane composite layer is 100 wt%.

In a sixth preferred embodiment, the invention relates to the non-pneumatic tire according to any of embodiments 1 or 2, wherein the thermoplastic expandable polymer material is one or more selected from the group consisting of foamable thermoplastic polyurethane, foamable polyethylene, foamable polypropylene materials and foamable vinyl acetate.

In a seventh preferred embodiment, the invention relates to the non-pneumatic tire according to any of embodiments 1 or 2, wherein the thermoplastic expandable polymer material is distributed in the polyurethane matrix in the form of particulates. In an eighth preferred embodiment, the invention relates to the non-pneumatic tire according to any of embodiments 1 or 2, characterized by further comprising a rubber layer arranged externally to the polyurethane composite layer.

In a ninth preferred embodiment, the invention relates to the non-pneumatic tire according to any of embodiments 1 or 2, wherein the thermoplastic expandable polymer material has a particle diameter of 2-8 mm, preferably of 3-7 mm, and more preferably of 4-6 mm.

In a tenth preferred embodiment, the invention relates to the non-pneumatic tire according to any of embodiments 1 or 2, wherein the polyurethane composite layer has a molding density of 320-600 kg/m³, preferably of 350-450 kg/m³(according to ISO 845).

In an eleventh preferred embodiment, the invention relates to the non-pneumatic tire according to the third embodiment, wherein the naphthenic oil may be incorporated into the component (A1), wherein the naphthenic oil presents 5-50 wt%, preferably 10-30 wt%, based on that the weight of the component (A1) is 100 wt%; or the naphthenic oil may be incorporated into at least one of the components (B1) to (B4), wherein the naphthenic oil presents 5-30 wt%, preferably 10-20 wt%, based on that the total weight of the components (B1)-(B4) is 100 wt%.

In a twelfth preferred embodiment, the invention relates to a method for preparing a non-pneumatic tire, wherein the non-pneumatic tire comprises a polyurethane composite layer which comprises a polyurethane matrix material and a thermoplastic expandable polymer material dispersed in the polyurethane matrix material, the method comprising the following steps:
1) adding the thermoplastic expandable polymer material to a mold cavity for molding the polyurethane composite layer and uniformly distributing the thermoplastic expandable polymer material in the mold cavity through centrifugal rotation,
2) injecting a polyurethane system for forming the polyurethane matrix material into the mold cavity where the polyurethane system is subjected to centrifugal-molding foaming and cured so as to obtain the polyurethane composite layer; and
3) obtaining the non-pneumatic tire from the polyurethane composite layer, wherein the polyurethane matrix material is obtained by a reaction of the following reaction components:
   (A1) a polyisocyanate composition;
   (B1) at least one polyalkylene oxide-based polyether polyol having a number average molecular weight of 2000-7000 g/mol (calculated according to GB/T 7383-2007: test method for hydroxyl value) and containing 15-35 wt% of solid particles based on the total weight of the polyether polyol;
   (B2) one or more chain extenders;
   (B3) one or more catalysts; and
   (B4) one or more foaming agents.

In a thirteenth preferred embodiment, the invention relates to the method according to the twelfth embodiment, wherein the reaction components for the polyurethane matrix material further comprise one or more naphthenic oils as a component.

In a fourteenth preferred embodiment, the invention relates to the method according to any of embodiments 12 or 13, further comprising the step of preheating the mold to 60-90°C before step 1).

In a fifteenth preferred embodiment, the invention relates to the method according to any of embodiment 12 or 13, wherein the polyisocyanate composition has a free NCO-value of 15-25 wt% (test method: GBT 18446-2009) and comprises an isocyanate-terminated prepolymer being the reaction product of excessive organic polyisocyanate with a polyether polyol, wherein the polyether polyol has an average nominal hydroxyl functionality of 2-6, a number average molecular weight of 2000-6000 g/mol and an ethylene oxide content of 20-35 wt%, wherein at least 50% of the ethylene oxide groups are present at the end of the polyether polyol.

In a sixteenth preferred embodiment, the invention relates to the method according to any of embodiments 12 or 13, wherein the thermoplastic expandable polymer material has a density of 80-300g/m³, preferably of 80-200 g/m³, and more preferably of 80-150 g/m³.

In a seventeenth preferred embodiment, the invention relates to The method according to any of embodiments 12 or 13, wherein the content of the thermoplastic expandable polymer material is 10-50wt%, preferably 10-35wt%, based on that the weight of the polyurethane composite layer is 100 wt%.

In an eighteenth preferred embodiment, the invention relates to The method according to any of embodiments 12 or 13, wherein the thermoplastic expandable polymer material is one or more selected from the group consisting of thermoplastic polyurethane, foamable polyethylene, foamable polypropylene materials and foamable vinyl acetate.

In a nineteenth preferred embodiment, the invention relates to The method according to any of embodiments 12 or 13, wherein the thermoplastic expandable polymer material is distributed in the polyurethane matrix in the form of particulates.

In a twentieth preferred embodiment, the invention relates to the method according to any of embodiments 12 or 13, wherein the non-pneumatic tire further comprises a rubber layer arranged externally to the polyurethane composite layer.

In a twenty-first preferred embodiment, the invention relates to the method according to any of embodiments 12 or 13, wherein the thermoplastic expandable polymer material has a particle diameter of 2-8 mm, preferably of 3-7 mm, and more preferably of 4-6 mm, and the thermoplastic expandable polymer material are distributed in the polyurethane matrix.

In a twenty-second preferred embodiment, the invention relates to the method according to any of embodiments 12 or 13, wherein the polyurethane composite has a molding density of 320-600 kg/m³, preferably of 350-450 kg/m³(according to ISO 845).

In a twenty-third preferred embodiment, the invention relates to the method according to the thirteenth embodiment, wherein the naphthenic oil may be incorporated into the component (A1), wherein the naphthenic oil presents 5-50 wt%, preferably 10-30 wt%, based on that the weight of the component (A1) is 100 wt%; or the naphthenic oil may be incorporated into at least one of the components (B1) to (B4), wherein the naphthenic oil presents 5-30 wt%, preferably 10-20 wt%, based on that the total weight of the components (B1)-(B4) is 100 wt%.

In a twenty-forth preferred embodiment, the invention relates to the use of the non-pneumatic tire according to any of embodiments 1-11 in the manufacture of a non-motor vehicle having at least two wheels and a speed of less than 30km/h.

In a twenty-fifth preferred embodiment, the invention relates to a non-motor vehicle comprising at least two non-pneumatic tires, wherein at least one of the non-pneumatic tires is the non-pneumatic tire according to any of embodiments 1-11.

### Examples

The present invention is illustrated with the following Examples.

Table 1 summarized the items and methods for testing the non-pneumatic tire performance in industrial practice. The non-pneumatic tire performance test in the present application was performed according to the method listed in Table 1.

**Table 1 Items and methods for testing the non-pneumatic tire performance in industrial practice**

| **Test items** | **Requirements** | **Test methods (single wheel test)** |
|---|---|---|
| Pressure test | Damping characteristic | Test on a RR tester: sequentially load a 5.0 to 50 kg load, observe and record the compression deformation value. |
| Rolling resistance | Refer to ISO7176-42008 | Test on a RR tester: sequentially load a 10.0 to 50 kg load, observe and record the rolling frictional resistance. |
| Tire blowout test | ≥400000 circles (4m/s) | Test on a tire blowout tester: load a 100.0 kg load, test at an operating speed of 4m/s, and record the number of running cycles when the tire blows out. |
| Speed limit | ≥24H (15km/h) | Test on a speed limit tester: load a 100.0 kg load, test at an operating speed of 330rpm, record the total running time when the tire is fatigued and scrapped. |
| Unbiased sensitive points | 1. Verify that the runout tester is in place, load a 55kg load on the caster and hold for 24 hours. After 24 hours, remove the load and immediately measure and record the runout for 1 minute and 4 minutes. Restart the test. Load a 48 kg load and run at a speed of 1 m/s or 2.2 mph for 3 minutes, measure and record the runout after removing the load. Requirements: the runout difference shall be less than 0.7mm. 2. Install the caster on a power seat, and load a 208 kg load. Remove the load after the power seat stands for 24 hours, and then drive the mechanism to automatically search for whether or not an unbiased sensitivity point can be found after 1 minute to 4 minutes. | Test on an unbiased sensitive point tester: maintain a load of 80kg for 24 hours, then start the test, verify and record the unbiased sensitive points. |
| 3D test | Fatigue test: 208kg (wheelchair)+136kg (load capacity)+20% safety redundancy (27.2kg)=372kg. 200,000rpm+6,666 bumps | Test on a 3D tester: with a total load of 372kg, record the number of revolutions in the event of fatigue failure. |
| Bump test | | Test on a bump tester: with a total load of 372kg, record the number of bumps in the event of fatigue failure. |
| Friction test | | Test on a friction tester: load a 3kg load for 1 hour in total, using 60 # sandpaper. |
| Fall-off test | Install the tire on a powered wheelchair, drive the wheelchair up to 45 degree test steps with the height of 2", 2.2.5", and 2.5", respectively, and note whether the tire falls off or is damaged. (Suitable for single-wheel test) | Test on a fall-off tester: gradually load a load, and record the load when the tire falls off or is damaged. |
| Push-out test | | Test on a push-out tester: gradually load a load, and record the load when the tire is pushed out. |
| Impact test | | Test on an impact tester: impact the tire with a 25kg load from a height of 400mm and check tire damage. |

Table 2 shows the raw materials used in the Examples of the present invention.

**Table 2 Raw materials used in the Examples**

| **Components** | **Names** | **Description** | **Suppliers** |
|---|---|---|---|
| Component A1 | Desmodur48IF46 | MDI isocyanate prepolymer with a NCO content of 25.0%, | Covestro Co., Ltd. |
| | Suprasec 2733 | MDI isocyanate prepolymer with a NCO content of 19.5%, | Huntsman Limited |
| Component A2 | Califlux LP | Naphthenic oil | Whitco Chemical Co., Ltd. |
| | Viplex 530A | Naphthenic oil | Crowley Chemical Co., Ltd. |
| Component B1 | Hyperlite E-851 | Grafted polyether polyol with a hydroxyl value of 18.5 | Covestro Co., Ltd. |
| | CHE-828P | Polyether polyol with a hydroxyl value of 28 and a viscosity of 1200 mPa·s at 25°C. | Jiangsu Changhua Polyurethane Technology Co., Ltd. |
| | CHE-330N | Polyether polyol with a hydroxyl value of 35 and a viscosity of 1200 mPa·s at 25°C | Jiangsu Changhua Polyurethane Technology Co., Ltd. |
| | CHP-H45 | Grafted polyether polyol with a hydroxyl value of 21 and a viscosity of 7000 mPa·s at 25°C | Jiangsu Changhua Polyurethane Technology Co., Ltd. |
| Component B2 | Terathane 2000 | Polytetrahydrofuran (PTMEG), with a hydroxyl value of 56 | BASF company |
| Component B2 | PS 3152 | Polyester polyol with a hydroxyl value of 315 and a viscosity of 2700mPa·s at 25°C | Steympian (Nanjing) Chemical Co., Ltd |
| Component B3 | B8715LF2 | Surfactant | Evonik Ltd. |
| Component B3 | Y10366 | Surfactant | Momentive Ltd. |
| Component B4 | DABCO33LV | Tertiary amine-typed catalyst | Air Products Co., Ltd. |
| Component B5 | Califlux LP | Naphthenic oil | Whitco Chemical Co., Ltd. |
| | Viplex 530A | Naphthenic oil | Crowley Chemical Co., Ltd. |
| Catalysts | NiaxA-300 | Tertiary amine-typed catalyst | Momentive Ltd. |
| | NiaxA-1 | Tertiary amine-typed catalyst | Momentive Ltd. |
| | T-12 | Dibutyltin laurate catalyst | Eastman Co., Ltd. |
| Thermoplastic expandable polymer | E-TPU | Thermoplastic TPU pearl cotton | Japanese JSP company |
| | Infinergy^{TM}32-100U10 | Thermoplastic TPU pearl cotton | BASF company |
| | EPE pearl cotton | Expandable and foamable Polyethylene having a non-crosslinked closed cell structure and a low density | ETAHFOAM from Dow Chemical Company |

### Examples 1-4

The component B and component A listed in Table 3 were mixed in a proportion of 100/64.8 with a low pressure foaming machine to obtain a two-component polyurethane system. A mold was heated to 65-70°C before starting centrifugal casting.

First, E-TPU pearl cotton was put into the mold according to the proportion listed in Table 4. E-TPU pearl cotton was uniformly distributed in the mold through centrifugal motion of the mold. The two-component polyurethane system was then centrifugally cast into the mold according to the weight ratio listed in Table 4.

The polyurethane system reacted and foamed, while uniformly compounding with the E-TPU pearl cotton. The mold was released after 10 min to obtain the corresponding E-TPU pearl cotton-containing microporous polyurethane elastic composite non-pneumatic tire. Then, the polyurethane-thermoplastic expandable polymer composite core tire was covered by a rubber cover tire to obtain the final product.

**Table 3 Raw Material Amounts of Polyurethane Systems in Comparative Example 1 and Examples 1-4**

| **Components** | **Raw Materials** | **Unit** | **Comparative Example 1** | **Example 1** | **Example 2** | **Example 3** | **Example 4** |
|---|---|---|---|---|---|---|---|
| B | CHE-828P | pbw | 60 | 60 | 60 | 60 | 60 |
| | Terathane 2000 | pbw | 40 | 40 | 40 | 40 | 40 |
| | 1,4- Butanediol | pbw | 1.0 | 1.0 | 1.0 | 1.0 | 1.0 |
| | Ethylene Glycol | pbw | 7.5 | 7.5 | 7.5 | 7.5 | 7.5 |
| | Y10366 | pbw | 0.45 | 0.45 | 0.45 | 0.45 | 0.45 |
| | A-400 | pbw | 0.12 | 0.12 | 0.12 | 0.12 | 0.12 |
| | DABCO33LV | pbw | 0.41 | 0.41 | 0.41 | 0.41 | 0.41 |
| | T-12, drop | pbw | 1 | 1 | 1 | 1 | 1 |
| | H₂O | pbw | 0.26 | 0.26 | 0.26 | 0.26 | 0.26 |
| | Premixed polyols | pbw | 100 | 100 | 100 | 100 | 100 |
| A | Isocyanate 48IF46 | pbw | 64.8 | 64.8 | 64.8 | 64.8 | 64.8 |

Table 4 summarizes the amounts of the polyurethane systems and thermoplastic expandable polymers, as well as the properties of the manufactured polyurethane composite layers in Comparative Example 1 and Examples 1-4. The performance test methods were shown in Table 1.

**Table 4 Raw Material Ratios and Properties of Polyurethane Composite Layer**

| **Raw Materials** | **Unit** | **Comparative Example 1** | **Example 1** | **Example 2** | **Example 3** | **Example 4** |
|---|---|---|---|---|---|---|
| Polyurethane System | wt% | 100 | 90 | 80 | 70 | 80 |
| E-TPU Pearl cotton | wt% | 0 | 10 | 20 | 30 | 0 |
| Infinergy™32-100 | wt% | 0 | 0 | 0 | 0 | 20 |

| **Items for Property Testing** | | | | | | |
|---|---|---|---|---|---|---|
| Tire Weight | g | 600 | 550 | 500 | 450 | 500 |
| Hardness | AskerC | 76 | 76 | 76 | 76 | 76 |
| Tensile Strength | MPa | 4.2 | 4.2 | 4.1 | 4.1 | 4 |
| Elongation at Break | % | 157 | 155 | 155 | 155 | 150 |
| Tear Strength | N/mm | 23 | 23 | 24 | 23 | 23 |
| Resilience | % | 40 | 40 | 42 | 46 | 42 |

The non-pneumatic tire in Comparative Example 1 was manufactured by using 100% of the polyurethane material, without any thermoplastic expandable polymer material, and thus obtained non-pneumatic tire had a weight of 600 g and a molding density of 450 kg/m³.

The tires obtained in Examples 1-4 were manufactured with the polyurethane composite, wherein the content of E-TPU pearl cotton or Infinergy™32-100 is 10-30 wt%, and had a weight of 450-550 g and a molding density of about 450 kg/m³, lower than those of Comparative Example 1.

The non-pneumatic tires obtained in Examples 1-4 met the performance testing requirements for non-pneumatic tire in the industrial practice in Table 1 at the ambient temperature of 20-25 °C.

The non-pneumatic tires obtained in Examples 1-4 were subjected to a durability test, which was carried out as follows: the tire was travelled 320 km with a speed of 6 km/h and a load of 70 kg at the ambient temperature of 20-25°C. The result of the durability test showed that the tire was undamaged.

The non-pneumatic tires obtained in Examples 1-4 were subjected to a resilience test, which was carried out as follows: the tire was loaded with 70 kg and statically pressed for 24 h. Once unloaded, it was started to roll and travel. Within 1-2 min, the size difference between the outer diameter of the tire and that of the tire before testing was measured. The result of the resilience test showed that the difference is no more than 0.1 mm.

Examples 1-4 demonstrated that the non-pneumatic tire manufactured with the composite comprising the foamed E-TPU pearl cotton and the polyurethane elastic foam had reduced tire weight, while having better resilience, and meeting the requirements for durability and resilience test of tire.

### Examples 5-8

The component B and component A listed in Table 5 were mixed in a proportion of 100/55 with a low pressure foaming machine to obtain a two-component polyurethane system. A mold was heated to 65-70°C before starting centrifugal casting.

First, the polyethylene pearl cotton EPEJW100 was put into the mold according to the proportion listed in Table 6. The polyethylene pearl cotton EPEJW100 was uniformly distributed in the mold through centrifugal motion of the mold. The two-component polyurethane system was then centrifugally cast into the mold according to the weight ratio listed in Table 6.

The polyurethane system reacted and foamed, while uniformly compounding with the polyethylene pearl cotton EPEJW100. The mold was released after 10 min to obtain the corresponding polyethylene pearl cotton EPEJW100-containing microporous polyurethane elastic composite non-pneumatic tire. Then, the polyurethane-thermoplastic expandable polymer composite core tire was covered by a rubber cover tire to obtain the final product.

**Table 5 Raw Material Amounts of Polyurethane Systems in Comparative Example 2 and Examples 5-8**

| **Components** | **Raw Materials** | **Unit** | **Comparative Example 2** | **Example 5** | **Example 6** | **Example 7** | **Example 8** |
|---|---|---|---|---|---|---|---|
| A | DesmophaneL-2830 | pbw | 55 | 55 | 55 | 55 | 55 |
| B | Terathane 2000 | pbw | 45 | 45 | 45 | 45 | 45 |
| | Ethylene glycol | pbw | 11 | 11 | 11 | 11 | 11 |
| | L-1500NT | pbw | 0.9 | 0.9 | 0.9 | 0.9 | 0.9 |
| | A-400 | pbw | 0.13 | 0.13 | 0.13 | 0.13 | 0.13 |
| | DABCO33LV | pbw | 0.46 | 0.46 | 0.46 | 0.46 | 0.46 |
| | T-12 | pbw | 0.04 | 0.04 | 0.04 | 0.04 | 0.04 |
| | H₂O | pbw | 0.39 | 0.39 | 0.39 | 0.39 | 0.39 |
| | Polyether composition | pbw | 100 | 100 | 100 | 100 | 100 |

Table 6 summarized the amounts of the polyurethane systems and thermoplastic expandable polymers, as well as the properties of the manufactured polyurethane composite layers in Comparative Example 2 and Examples 5-8. The performance test methods were shown in Table 1.

**Table 6 Raw Material Ratios and Properties of Polyurethane Composite Layer**

| **Raw Materials** | **Unit** | **Comparative Example 2** | **Example 5** | **Example 6** | **Example 7** | **Example 8** |
|---|---|---|---|---|---|---|
| Polyurethane | % | 100 | 90 | 85 | 80 | 75 |
| EPEJW 100 | % | 0 | 10 | 15 | 20 | 25 |
| **Items for Property Testing** | | | | | | |
| Product weight | g | 600 | 550 | 525 | 500 | 475 |
| Hardness | AskerC | 78 | 78 | 78 | 76 | 76 |
| Tensile Strength | MPa | 4.0 | 4.0 | 3.9 | 3.9 | 3.8 |
| Elongation at Break | % | 240 | 240 | 230 | 230 | 220 |
| Tear Strength | N/mm | 21 | 21 | 21 | 21 | 21 |
| Resilience | % | 54 | 52 | 52 | 50 | 48 |

The non-pneumatic tire in Comparative Example 2 was manufactured by using 100% of the polyurethane material, without any thermoplastic expandable polymer material, and thus obtained non-pneumatic tire had a weight of 600 g and a molding density of 450 kg/m³.

The tires obtained in Examples 5-8 were manufactured with the polyurethane composite, wherein the content of EPEJW100 is 10-30 wt%, and had a weight of 475-550 g and a molding density of about 450 kg/m³, lower than those of Comparative Example 1.

The non-pneumatic tires obtained in Examples 5-8 met the performance testing requirements for non-pneumatic tire in the industrial practice in Table 1 at the ambient temperature of 20-25 °C.

The non-pneumatic tires obtained in Examples 5-8 were subjected to a durability test, which was carried out as follows: the tire was travelled 320 km with a speed of 6 km/h and a load of 70 kg at the ambient temperature of 20-25°C. The result of the durability test showed that the tire was undamaged.

The non-pneumatic tires obtained in Examples 5-8 were subjected to a resilience test, which was carried out as follows: the tire was loaded with 70 kg and statically pressed for 24 h. Once unloaded, it was started to roll and travel. Within 1-2 min, the size difference between the outer diameter of the tire and that of the tire before testing was measured. The result of the resilience test showed that the difference is no more than 0.1 mm.

Examples 5-8 demonstrated that the non-pneumatic tire manufactured with the composite comprising the foamed E-TPU pearl cotton and the polyurethane elastic foam had reduced tire weight, while having better resilience, and meeting the requirements for durability and resilience test of tire.

### Examples 9-11

The component B and component A listed in Table 7 were mixed in a proportion of 100/58-62 with a low pressure foaming machine to obtain a two-component polyurethane system.

A mold was heated to 65-70°C before starting centrifugal casting.

First, the E-TPU pearl cotton was put into the mold according to the proportion listed in Table 8. The E-TPU pearl cotton was uniformly distributed in the mold through centrifugal motion of the mold.

The two-component polyurethane system was then centrifugally cast into the mold according to the weight ratio listed in Table 8.

The polyurethane system reacted and foamed, while uniformly compounding with the E-TPU pearl cotton.

The mold was released after 10 min to obtain the corresponding E-TPU pearl cotton-containing microporous polyurethane elastic composite non-pneumatic tire. Then, the polyurethane-thermoplastic expandable polymer composite core tire was covered by a rubber cover tire to obtain the final product.

**Table 7 Raw Material Amounts of Polyurethane Systems in Comparative Example 1 and Examples 9-11**

| **Components** | **Raw Materials** | **Unit** | **Comparative Example 1** | **Example 9** | **Example 10** | **Example 11** |
|---|---|---|---|---|---|---|
| B | Hyperlite E-851 | pbw | 60 | 60 | 60 | 60 |
| | Acclaim 4200N | pbw | 40 | 40 | 40 | 40 |
| | 1,4-butanediol | pbw | 1.0 | 1.0 | 1.0 | 1.0 |
| | Ethylene glycol | pbw | 7.5 | 7.5 | 7.5 | 7.5 |
| | Y10366 | pbw | 0.45 | 0.45 | 0.45 | 0.45 |
| | A-400 | pbw | 0.12 | 0.12 | 0.12 | 0.12 |
| | DABCO33LV | pbw | 0.41 | 0.41 | 0.41 | 0.41 |
| | T-12, | drop | 1 | 1 | 1 | 1 |
| | H₂O | pbw | 0.26 | 0.26 | 0.26 | 0.26 |
| | Viplex 530A | pbw | 0 | 0 | 10 | 0 |
| | Califlux LP | pbw | 0 | 5 | 0 | 10 |
| | Polyether composition | pbw | 100 | 100 | 100 | 100 |
| A | Isocyanate 48IF46 | pbw | 62 | 60 | 58 | 58 |
| | Califlux LP | pbw | 0 | 30 | 30 | 0 |
| | Viplex 530A | pbw | 0 | 0 | 0 | 30 |

Table 8 summarized the amounts of the polyurethane systems and thermoplastic expandable polymers, as well as the properties of the manufactured polyurethane composite layers in Comparative Example 1 and Examples 9-11. The performance test methods were shown in Table 1.

**Table 8 Raw Material Ratios and Properties of Polyurethane Composite Layer**

| **Raw Materials** | **Unit** | **Comparative Example 1** | **Example 9** | **Example 10** | **Example 11** |
|---|---|---|---|---|---|
| Polyurethane system | % | 100 | 90 | 90 | 90 |
| E-TPU pearl cotton | % | 0 | 10 | 10 | 10 |

| **Items for Property Testing** | | | | | |
|---|---|---|---|---|---|
| Tire weight | g | 600 | 550 | 550 | 550 |
| Hardness | AskerC | 76 | 76 | 76 | 76 |
| Tensile Strength | MPa | 4.2 | 4.3 | 4.3 | 4.2 |
| Elongation at Break | % | 157 | 150 | 150 | 150 |
| Tear Strength | N/mm | 23 | 22 | 21 | 21 |
| Resilience | % | 40 | 43 | 40 | 40 |

The non-pneumatic tire in Comparative Example 1 was manufactured by using 100% of the polyurethane material, without any thermoplastic expandable polymer material, and thus obtained non-pneumatic tire had a weight of 600 g and a molding density of 450 kg/m³.

The tires obtained in Examples 9-11 were manufactured with the polyurethane composite, wherein the content of E-TPU pearl cotton is 10 wt%, and had a weight of 550 g and a molding density of about 420 kg/m³, lower than those of Comparative Example 1.

The non-pneumatic tires obtained in Examples 9-11 met the performance testing requirements for non-pneumatic tire in the industrial practice in Table 1 at the ambient temperature of 20-25 °C.

The non-pneumatic tires obtained in Examples 9-11 were subjected to a durability test, which was carried out as follows: the tire was travelled 320 km with a speed of 6 km/h and a load of 70 kg at the ambient temperature of 20-25°C. The result of the durability test showed that the tire was undamaged.

The non-pneumatic tires obtained in Examples 9-11 were subjected to a resilience test, which was carried out as follows: the tire was loaded with 70 kg and statically pressed for 24 h. Once unloaded, it was started to roll and travel. Within 1-2 min, the size difference between the outer diameter of the tire and that of the tire before testing was measured. The result of the resilience test showed that the difference is no more than 0.1 mm.

Examples 9-11 demonstrated that the non-pneumatic tire manufactured with the composite comprising the foamed E-TPU pearl cotton and the polyurethane elastic foam had reduced tire weight and molding density, while having better resilience, and meeting the requirements for durability and resilience test of tire.

Although preferred Examples have been disclosed above in the present application, it is to be understood that they are not intended to limit the present invention. Those skilled in the art may make various modifications and variations without departing from the spirit and scope of the invention. The protection scope of the invention should be subject to the scope of the claims of the patent application.

## Claims

1. A non-pneumatic tire, comprising a polyurethane composite layer which comprises a polyurethane matrix material and a thermoplastic expandable polymer material dispersed in the polyurethane matrix material,
wherein the polyurethane matrix material is obtained by a reaction comprising the following components:
(A1) a polyisocyanate composition;
(B1) at least one polyalkylene oxide-based polyether polyol having a number average molecular weight of 2000-7000 g/mol (calculated according to GB/T 7383-2007: test method for hydroxyl value) and containing 15-35 wt% of solid particles based on the total weight of the polyether polyol;
(B2) one or more chain extenders;
(B3) one or more catalysts; and
(B4) one or more foaming agents.

2. The non-pneumatic tire according to claim 1, wherein the polyisocyanate composition has a free NCO-value of 15-25 wt% (test method: GBT 18446-2009) and comprises an isocyanate-terminated prepolymer being the reaction product of excessive organic polyisocyanate with a polyether polyol, wherein the polyether polyol has an average nominal hydroxyl functionality of 2-6, a number average molecular weight of 2000-6000 g/mol (calculated according to GB/T 7383-2007: test method for hydroxyl value) and an ethylene oxide content of 20-35 wt%, wherein at least 50% of the ethylene oxide groups are present at the end of the polyalkylene oxide-based polyether polyol.

3. The non-pneumatic tire according to claim 1 or 2, wherein the polyurethane matrix material further comprises one or more naphthenic oils as a component.

4. The non-pneumatic tire according to claim 1 or 2, wherein the thermoplastic expandable polymer material has a density of 80-300g/m³, preferably of 80-200 g/m³, and more preferably of 80-150 g/m³.

5. The non-pneumatic tire according to claim 1 or 2, wherein the content of the thermoplastic expandable polymer material is 10-50wt%, preferably 10-35wt%, based on that the weight of the polyurethane composite layer is 100 wt%.

6. The non-pneumatic tire according to claim 1 or 2, wherein the thermoplastic expandable polymer material is one or more selected from the group consisting of foamable thermoplastic polyurethane, foamable polyethylene, foamable polypropylene materials and foamable vinyl acetate.

7. The non-pneumatic tire according to claim 1 or 2, wherein the thermoplastic expandable polymer material has a particle diameter of 2-8 mm, preferably of 3-7 mm, and more preferably of 4-6 mm.

8. The non-pneumatic tire according to claim 1 or 2, wherein the polyurethane composite layer has a molding density of 320-600 kg/m³, preferably of 350-450 kg/m³(according to ISO 845).

9. The non-pneumatic tire according to claim 3, wherein the naphthenic oil may be incorporated into the component (A1), wherein the naphthenic oil presents 5-50 wt%, preferably 10-30 wt%, based on that the weight of the component (A1) is 100 wt%; or the naphthenic oil may be incorporated into at least one of the components (B1) to (B4), wherein the naphthenic oil presents 5-30 wt%, preferably 10-20 wt%, based on that the total weight of the components (B1)-(B4) is 100 wt%.

10. A method for preparing a non-pneumatic tire, wherein the non-pneumatic tire comprises a polyurethane composite layer which comprises a polyurethane matrix material and a thermoplastic expandable polymer material dispersed in the polyurethane matrix material, the method comprising the following steps:
1) adding the thermoplastic expandable polymer material to a mold cavity for molding the polyurethane composite layer and uniformly distributing the thermoplastic expandable polymer material in the mold cavity through centrifugal rotation,
2) injecting a polyurethane system for forming the polyurethane matrix material into the mold cavity where the polyurethane system is subjected to centrifugal-molding foaming and cured so as to obtain the polyurethane composite layer; and
3) obtaining the non-pneumatic tire from the polyurethane composite layer, wherein the polyurethane matrix material is obtained by a reaction of the following reaction components:
(A1) a polyisocyanate composition;
(B1) at least one polyalkylene oxide-based polyether polyol having a number average molecular weight of 2000-7000 g/mol (calculated according to GB/T 7383-2007: test method for hydroxyl value) and containing 15-35 wt% of solid particles based on the total weight of the polyether polyol;
(B2) one or more chain extenders;
(B3) one or more catalysts; and
(B4) one or more foaming agents.

11. The method according to claim 12, wherein the reaction components for the polyurethane matrix material further comprise one or more naphthenic oils as a component.

12. The method according to claim 11 or 12, further comprising the step of preheating the mold to 60-90°C before step 1).

13. The method according to claim 12 or 13, wherein the polyisocyanate composition has a free NCO-value of 15-25 wt% (test method: GBT 18446-2009) and comprises an isocyanate-terminated prepolymer being the reaction product of excessive organic polyisocyanate with a polyether polyol, wherein the polyether polyol has an average nominal hydroxyl functionality of 2-6, a number average molecular weight of 2000-6000 g/mol and an ethylene oxide content of 20-35 wt%, wherein at least 50% of the ethylene oxide groups are present at the end of the polyether polyol.

14. Use of the non-pneumatic tire according to any one of claims 1-11 in the manufacture of a non-motor vehicle having at least two wheels and a speed of less than 30km/h.

15. A non-motor vehicle comprising at least two non-pneumatic tires, wherein at least one of the non-pneumatic tires is the non-pneumatic tire according to any one of claims 1-11.
